(19) Europäisches Patentamt
European Patent Office
Office européen des brevets

(11) EP 2 850 862 B1

(12) **EUROPEAN PATENT SPECIFICATION**

(45) Date of publication and mention
of the grant of the patent:
**03.10.2018 Bulletin 2018/40**

(51) Int Cl.:
*H04L 29/06* (2006.01)       *H04W 12/06* (2009.01)
*H04W 68/02* (2009.01)

(21) Application number: **12761685.2**

(22) Date of filing: **15.05.2012**

(86) International application number:
**PCT/SE2012/050517**

(87) International publication number:
**WO 2013/172750 (21.11.2013 Gazette 2013/47)**

(54) **SECURE PAGING**

SICHERER FUNKRUF

RADIOMESSAGERIE SÉCURISÉE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**25.03.2015 Bulletin 2015/13**

(73) Proprietor: **Telefonaktiebolaget LM Ericsson
(publ)
164 83 Stockholm (SE)**

(72) Inventors:
• **ARKKO, Jari
FI-02700 Kauniainen (FI)**
• **SAHLIN, Bengt
FI-02360 Espoo (FI)**
• **LARMO, Anna
FI-02600 Espoo (FI)**
• **SLAVOV, Kristian
FI-02610 Espoo (FI)**
• **NORRMAN, Karl
S-11628 Stockholm (SE)**

(74) Representative: **Ericsson
Patent Development
Torshamnsgatan 21-23
164 80 Stockholm (SE)**

(56) References cited:
**US-A- 5 889 861     US-A1- 2003 061 480**

• **ANDREAS DEININGER, SHINSAKU KIYOMOTO,
JUN KURIHARA, TOSHIAKI TANAKA: "Security
Vulnerabilities and Solutions in Mobile WiMAX",
IJCSNS INTERNATIONAL JOURNAL OF
COMPUTER SCIENCE AND NETWORK
SECURITY, vol. 7, no. 11, 1 November 2007
(2007-11-01), pages 7-15, XP002691925,**

## Description

Technical Field

The present invention relates to secure paging mechanisms for mobile terminals in a cellular network. In particular, although not exclusively, the invention relates to apparatus and methods for authenticating paging requests to terminals.

Background

Current cellular communication networks offer a high degree of security to users. Security ensures both authentication of users to the network and *vice versa,* and protection against eavesdropping. Security may also provide integrity protection allowing a recipient of data (possibly within the network) to confirm the integrity of sent data. This may involve a sender adding an integrity checksum to a message and which is computed using a secret key. The receiver, knowing the secret key, can verify the integrity checksum and thereby ensure that the message has indeed been sent by the trusted sender and has not been tampered with while in transit.

Such security mechanisms have been developed to work efficiently with conventional cellular network use cases. These tend to be concerned with users possessing mobile devices such as mobile telephones, smart phones, and other wireless enabled devices, and who make use of voice and data services. Such services involve the transfer of significant amounts of data to and from the user devices. Volumes of signalling traffic associated with these scenarios are not great when compared to the transferred data volumes. As such, the signalling overheads associated with security mechanism such as client and network authentication are relatively small.

In the coming years it is expected that there will be a rapid growth in so-called machine-to-machine (M2M) applications that use cellular network infrastructure. Such applications involve devices such as sensors and actuators communicating with other devices or network servers, often without direct human operation. An example application might involve domestic water meters configured to transmit water consumption readings periodically to a server owned by the utility company supplying water. M2M applications are expected to increase dramatically the number of wirelessly connected devices in use with cellular networks. Ericsson™ has predicted 50 billion such devices by the year 2020.

A feature that distinguishes M2M applications from conventional cellular network services is the relatively small amounts of data traffic associated with the former. An electricity meter reading application might, for example, require only the sending of a few bytes of data each month. Nonetheless, given the huge number of devices that are expected to be in use, the total volume of traffic that will be added to networks will be very great.

The existing signalling mechanisms, including those associated with security, are not necessarily well suited to M2M applications, and only add to the load on the network.

A signalling mechanism useful for M2M devices is paging. Cellular networks page individual devices on a common channel, when those devices have traffic that they should prepare to receive. For paging purposes, a certain period of time is divided into several timeslots, one for each paging group. Members of a paging group listen only during their scheduled timeslot. For the rest of the time the device may turn off its radio. A device is allocated into a paging group based on a function of its Temporary Mobile Subscriber Identity (TMSI), and some other operator controlled parameters.

In principle, a paging message could be secured by either a symmetric integrity and authentication mechanism such as Message Authentication Codes (MACs) or through asymmetric cryptography such as public key signatures. However, in today's cellular networks, paging is essentially insecure due to a number of factors:

- Paging messages are broadcast or multicast to a large number of mobile terminals, and currently no group keys exist for securing these messages.
- Even if such group keys did exist, the use of shared group keys with a large number of group participants is insecure.
- 3GPP has, in general, not adopted asymmetric cryptographic mechanisms, at least not at the lower layers of the protocol stack. Public key techniques are therefore unlikely to be desirable.
- Even if public key technology was used, the necessary signatures are expensive to make and long to transmit, leading to unacceptable overheads in network usage.

In general, lack of security for paging has not so far been an insurmountable problem. This is partly because most devices in cellular networks to date have been mobile phones or other devices in direct human use. If a paging attack were to be mounted leading to the battery of such devices running down, the solution is to recharge the battery. However, the problem is likely to increase as a bigger fraction of devices are not in direct human use. If a million water meters or fifty thousand environmental measurement devices run out of battery because of a paging protocol attack, the consequences may be severe. Since these devices are not under individual human control, the cost to replace the batteries in each device can be prohibitive. In utility meters, for instance, the idea of the meters is that no one has to visit the meter even once in a year. Such meters are also often placed in inaccessible locations.

It would therefore be desirable to add security to paging messages to ensure that devices respond only to messages they can be sure are genuine. However, existing authentication and cryptographic approaches are not generally suitable for paging to a large number of devices for a number of reasons:

- Shared secrets distributed to a large number of devices cannot be assumed to be secure. A compromised device could pretend to be a base station and send a "secure" paging message, as it has access to the shared key.
- It is not easy to use per-device keys in the traditional manner with a shared secret and MAC, as adding MACs for every different device would significantly increase the size of the paging messages and processing required.
- Public key signatures require the addition of trust anchors and adopting asymmetric cryptography. These have not traditionally been used at this layer of 3GPP network access technology.
- The computation and verification of public key signatures in real time, and the number of bits necessary to transmit a signature, would add to the cost of paging.

US 2003/061480 A1 discloses a method related to a security mechanism for IP paging areas/IP paging requests.

Summary

It is an object of the present invention to address, or at least alleviate, the problems described above.

In accordance with one aspect of the present invention there is provided a device for communicating with a network. The device comprises a communications unit for sending and receiving data, a storage unit for storing data, and a control unit for controlling operation of the communications unit and storage unit. The communications unit is configured to receive a series of paging messages from a serving node in the network, where each paging message includes identification and authentication information sufficient to identify at least one device and authenticate the message, at least some of the information having been protected according to a sequence such that it varies between successive paging messages. The control unit is configured to verify the protected part of the information using a cryptographic function and knowledge of the sequence and identify whether the information indicates that message is an authentic message intended for that device. The identification and authentication information in each paging message includes at least one device identifier and authentication data is sent as a separate value from the device identifier It also confirms, when a new paging message is received, that the new paging message is secure by determining that the authentication data in the previous paging message is correctly derivable from the authentication data in the new paging message using a one-way hash function stored in the storage unit.
The control unit may also be configured to determine whether the device should act in response to the received paging message.

It will be appreciated that the protected part of the information may include authenticated data and/or encrypted data, and that verifying the protected part of the information may include decrypting encrypted data where necessary.

The identification and authentication information in each paging message may include at least one device identifier and authentication data sent as a separate value from the device identifier. The control unit may be configured to confirm, when a new paging message is received, that the new paging message is secure by determining that the authentication data in the previous paging message is correctly derivable from the authentication data in the new paging message using a one-way hash function stored in the storage unit.

In order to protect the integrity of the paging messages, each paging message may contain an authentication code calculated as a function of all device identifiers included in the paging message and the authentication data in that message. The authentication code may be included in the paging message before the device identifiers and the authentication data. The control unit may be configured to confirm that the paging message is secure only if it determines that the authentication code is correct.

Each paging message may contain an authentication code calculated as a function of all device identifiers included in the paging message and the authentication data to be used in the subsequent paging message. The control unit may be configured to confirm that the authentication code is correct following receipt of the authentication data in the subsequent paging message.

As an alternative, the identification and authentication information in each paging message may include at least one encrypted device identifier. The control unit may be configured to identify whether any encrypted device identifier corresponds to the device and, if so, that the paging message is intended for that device.

For each device, the encrypted device identifiers for that device in the series of paging messages may follow a sequence for that device, where each encrypted device identifier for that device is derivable from the preceding member of the sequence. The control unit may be configured to calculate the encrypted device identifier for that device for each paging message in accordance with the sequence.

The first encrypted device identifier in the sequence for each device may be calculated from a secret shared between that device and the serving node.

In one embodiment, the device and the serving node share a key. The encrypted device identifier in each paging message may be encrypted using the shared key from a combination of a device identifier and a message identifier. The control unit may be configured to decrypt the at least one encrypted device identifier using the shared key and message identifier to identify whether any device identifier corresponds to that device.

The message identifier may be a sequence number, and may be explicitly carried separately in the paging message.

Alternatively, it may be that the message identifier is not explicitly carried in the paging message. The control unit may be configured to calculate the message identifier using a predetermined counter or a timestamp.

The encrypted device identifier in each message may be encrypted using a HMAC function based on the shared key.

The encrypted device identifier may contain more bits than the device identifier.

The shared key may be calculated from a cipher key and/or integrity key.

The device may be a M2M device.

In accordance with another aspect of the present invention there is provided a serving network node. The serving node comprises a communications unit for sending and receiving data, a storage unit for storing data, and a control unit for controlling operation of the communications unit and storage unit. The control unit is configured to generate a series of paging messages for client devices in the network, each paging message including identification and authentication information sufficient to identify at least one client device and authenticate the message to that device. At least some of the information is protected according to a sequence such that it varies between successive paging messages. The control unit is configured to write the identification and authentication information into each paging message as at least one device identifier and authentication data sent as a separate value from the device identifier, the authentication data in each paging message being derived from the authentication data in the subsequent paging message using a one-way hash function stored in the storage unit

The control unit may be configured to write the identification and authentication information into each paging message as at least one device identifier and authentication data sent as a separate value from the device identifier, where the authentication data in each paging message is derived from the authentication data in the subsequent paging message using a one-way hash function stored in the storage unit.

The control unit may be configured to insert into each paging message an authentication code calculated as a function of all device identifiers included in the paging message and the authentication data in that message, the authentication code being included in the paging message before the device identifiers and the authentication data.

The control unit may be configured to insert into each paging message an authentication code calculated as a function of all device identifiers included in the paging message and the authentication data to be used in the subsequent paging message.

The control unit may be configured to generate at least one encrypted device identifier for insertion into each paging message as the identification and authentication information.

For each device, the control unit may be configured to generate a sequence of encrypted device identifiers for insertion into the series of paging messages, each encrypted device identifier for the device being derivable from the preceding member of the sequence.

The first encrypted device identifier in the sequence may be calculated from a secret shared between the device and the serving node.

The serving node and device may share a key. The control unit may be configured to generate the encrypted device identifier in each paging message using the shared key from a combination of a device identifier and a message identifier. The control unit may be configured to generate the encrypted device identifier in each message using a HMAC function based on the shared key.

In accordance with another aspect of the present invention there is provided a method of operating a device for communicating with a network. The method includes receiving a series of paging messages, each paging message including identification and authentication information sufficient to identify at least one device and authenticate the message, where at least some of the information has been protected according to a sequence such that it varies between successive paging messages The method further includes deriving the protected part of the information using a cryptographic function and knowledge of the sequence, and identifying whether the information indicates that the device should act in response to the received paging message. The identification and authentication information in each paging message includes at least one device identifier and authentication data sent as a separate value from the device identifier. It confirms this when a new paging message is received, that the new paging message is secure by determining that the authentication data in the previous paging message is correctly derivable from the authentication data in the new paging message using a one-way hash function.

In accordance with another aspect of the present invention there is provided a method of securing a sequence of paging messages sent from a serving node to a client node in a network. The method comprises including in each paging message identification and authentication information sufficient to identify at least one device and authenticate the message, at least some of the information being protected according to a sequence such that it varies between successive paging messages. The identification and authentication information in each paging message includes at least one device identifier and authentication data sent as a separate value from the device identifier. The identification and authentication information is written into each paging message as at least one device identifier and authentication data sent as a separate value from the device identifier, the authentication data in each paging message being derived from the authentication data in the subsequent paging message using a one-way hash function.

The invention also provides a computer program, comprising computer readable code which, when operated by a device, causes the device to operate as a device as described above.

The invention further provides a computer program, comprising computer readable code which, when operated by a serving network node, causes the serving network node to operate as a node as described above.

The invention also provides a computer program product comprising a computer readable medium and a computer program as described above, wherein the computer program is stored on the computer readable medium.

Brief Description of the Drawings

Some preferred embodiments of the invention will now be described by way of example only and with reference to the accompanying drawings, in which:

Figure 1 is a schematic diagram of elements of a network configured to page client devices;

Figure 2 is a schematic diagram of the network of Figure 1 illustrating one approach to securing paging messages;

Figure 3 is a schematic diagram of the network of Figure 1 illustrating another approach to securing paging messages;

Figure 4 is a schematic diagram of the network of Figure 1 illustrating a further approach to securing paging messages;

Figure 5 is a flow diagram illustrating the implementation of the approach to securing paging messages shown in Figure 2;

Figure 6 is a flow diagram illustrating the implementation of the approach to securing paging messages shown in Figure 3;

Figure 7 is a flow diagram illustrating the implementation of the approach to securing paging messages shown in Figure 3;

Figure 8 is a schematic diagram of an alternative architecture of a serving node; and

Figure 9 is a schematic diagram of an alternative architecture of a client device.

Detailed Description

The approach adopted is to use cryptographically generated identifiers for paging so that outsiders or other devices in the same network cannot forge paging messages. A device that sees a paging message verifies that it has the right value, and only then proceeds to take action based on the paging message.

At least two methods can be used to implement this approach: hash chains and cryptographically generated identifier sequences (CGIS). In a CGIS, two peers in a communication share a secret, or secret key, K, and both sides generate a sequence of values by applying a stream cipher (or other cryptographic function such as a pseudo-random function) with K. The peers can then send messages to each other so that both sides know which value to expect in each new message. Every message consumes a value, and outsiders without access to K have no way of guessing what the next values in the sequence are.

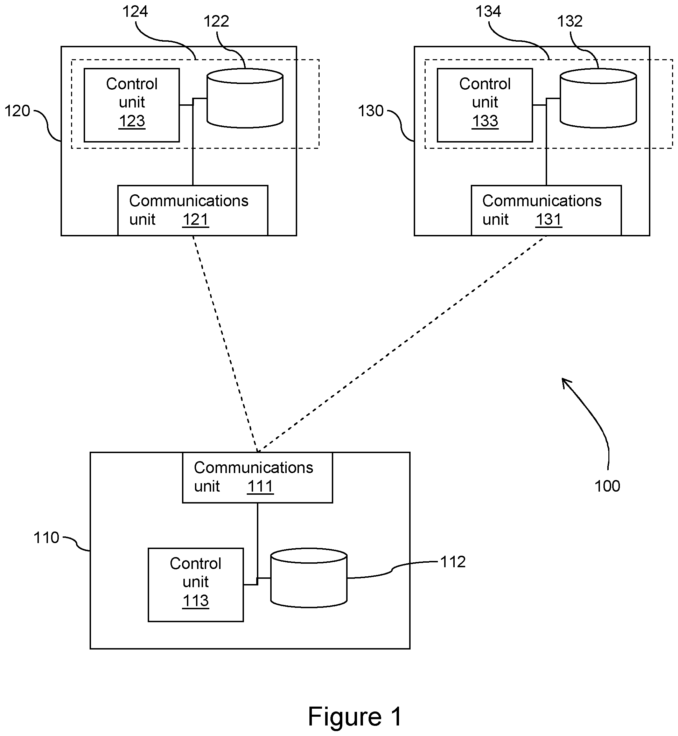

Figure 1 is a schematic illustration of elements of a network 100 configured to page network nodes. The network 100 includes a serving node (e.g. a base station) 110 and two exemplary client devices 120, 130. The client devices 120, 130 may be M2M devices or user-operated mobile devices, such as e.g. mobile phones, or any other type of manually controlled device capable of being paged.

The serving node 110 includes a communications unit 111 for sending and receiving data, a storage unit 112 for storing data, and a control unit 113 for controlling the operation of the communications unit 111 and storage unit 112. It will be appreciated that the control unit 113 can be operated by hardware or software. The control unit 113 enables the serving network node 110 to issue paging requests as described below. This may be achieved, for example, if the control unit 113 includes a processor having installed thereon a program to instruct the serving node to carry out these processes. The storage unit 112 may comprise suitable hardware such as ROM, RAM, flash memory, hard disks *etc.* in order to enable the necessary data to be stored and recovered.

Each client device 120, 130 includes a communications unit 121, 131 for sending and receiving data, a storage unit 122, 132 for storing data, and a control unit 123, 133 for controlling the operation of the communications unit 121, 131 and storage unit 122, 132. It will be appreciated that the control units 123, 133 can be operated by hardware or software. Each control unit 123, 133 enables the associated client device to authenticate and read paging requests as described below. This may be achieved, for example, if each control unit 123, 133 includes a processor having installed thereon a program to instruct the associated client device to carry out these processes. A storage unit as well as at least some of the security related processing may at least partially be implemented in a tamper resistant smart card module (e.g. SIM, ISIM, USIM) 124, 134 for each client device, holding secret keys associated with the user (and which are also shared with the serving node). This smart card module 124, 134 may be removably attached to the rest of the associated client node device 120, 130. Each storage unit 122, 132 may comprise suitable hardware such as ROM, RAM, flash memory, *etc.* in order to enable the necessary data to be stored and recovered.

In operation, the serving node 110 pages the client devices 120, 130 by sending paging messages from its communications unit 111 under the control of the control unit 113. The paging messages can be secured in a number of ways. Three approaches are described below. In the first approach, protected information in the form of a hash chain proves to every client device 120, 130 that a new paging message can only have come from the serving node 110. In the second approach, each client device 120, 130 calculates a secret sequence of values, and looks for the next identifier in this sequence when it examines the paging message list of nodes to be woken up. In the third approach, device identities are replaced by a MAC value that is calculated with a per-device key. Thus, in the second and third approaches, the protected information is an encrypted version of the device identifier.

## 1. Hash chains

Using the first approach, the serving node 110, or the network, calculates a sequence of values, such that

$$h_0 = \text{a random value}$$
$$h_1 = h(h_0),\ h_2 = h(h_1),\ ...,\ h_i = h(h_{i-1}),...\ h_n = h(h_{n-1})$$

where h is a one-way hash function.

The serving node 110 sets a current index, $i$, to $n$:

$i = n$

When client devices join the network the serving node sends them the current index $i$ and the current hash value $h_i$. Paging messages are sent at regular intervals, and after each transmission the current index is decremented by one. Each message contains

$h_{i-1}$

Each client device 120, 130 can verify that the paging message is secure, by checking that the previously received value $h_i$, matches the new value $h_{i-1}$ by confirming that $h_i = h(h_{i-1})$.

If a client device 120, 130 has missed paging messages, it may need to calculate several steps towards the hash value that it has last received. When the hash chain runs to the end or devices forget their state, they have to re-attach to the network.

Any client devices that did not generate the hash chain are unable to construct the right new value, because the hash function, $h$, is a one-way function. That is, it is impossible to find $h_{i-1}$ so that it would hash to $h_i$, except by exhaustive search.

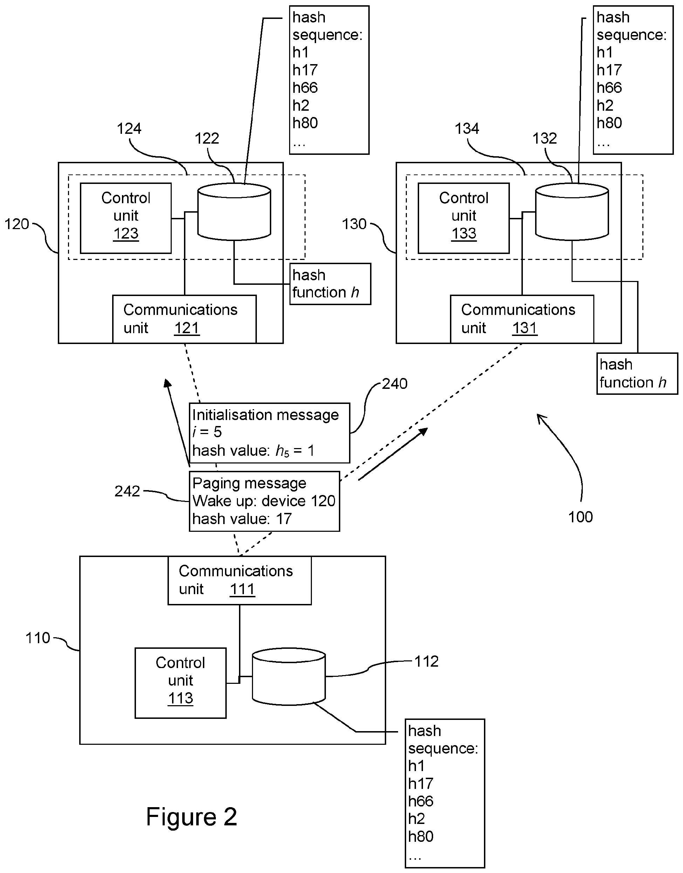

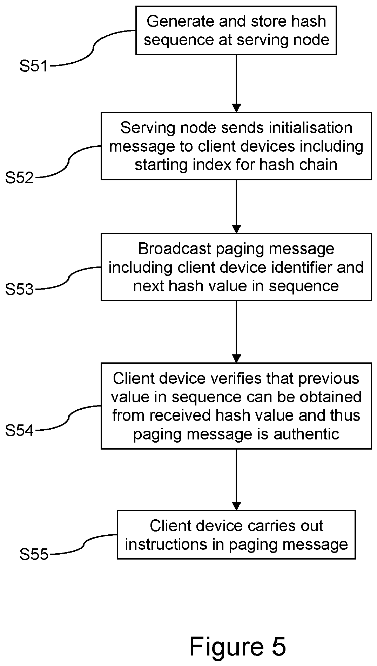

This can be understood with reference to figures 2 and 5. The control unit 113 of the serving node 110 generates a hash sequence (*e.g.* 1, 17, 66, 2, 80) and stores this in its storage device 112 (step S51 in figure 5). It also sends an initialisation message 240 to the client devices 120, 130 in the network (step S52). The initialisation message includes the starting index ($i = 5$) for the hash chain, and the first value ($h_5 = 1$). The initialisation message 240 may be protected using a suitable system to ensure that it cannot be intercepted and read by a third party. Because it is not a paging message the additional overhead required for more secure encryption is acceptable for this message type.

When the serving node 110 wishes to wake up one of the devices 120, it broadcasts a paging message 242 in the time slot watched by device 120 (step S53). The paging message 242 will be sent to all devices in the network, but includes a device identifier for device 120 and instructions to device 120 to wake up, together with the next hash value in the sequence: $h_4 = 17$. The control unit 123 of the client device 120 confirms in step S54 that $1 = h(17)$ and that the message has therefore really come from the serving node 110. It therefore carries out in step S55 the instructions contained in the paging message (*e.g.* wake up, prepare to receive additional message, carry out measurement and report, *etc.*)

The other client device 130 does not act on the paging message 242 since it does not contain a device identifier for that device.

It will be appreciated that the hash value does not by itself protect the integrity of the paging message. In theory, it would still be possible for a third party to carry out an attack by obtaining the correct hash value from a real message sent by the serving node, replace the list of devices to be waken up, and resend the message to the actual devices. However, this is difficult to carry out effectively. Particular difficulties include:

- The attacker must be able to receive the message from the serving node 110 while at the same time blocking the message from going through to other devices. If the devices receive the message they will consider the hash value already used, and the attack no longer works.
- The attack must get the timing exactly right, because the devices will be listening on a given timeslot, and sending the paging message later will either miss the timeslot or the devices believe they should see a newer hash value.

One possible way of launching this type of attack would be to carry out live editing of the message from the serving node 110, by allowing the parts of the message involving the hash chain to go through but modifying the parts that carry the device list. This can be countered by the following method.

It can be assumed that the bits in the paging message are transmitted in sequence, and that the nodes are sufficiently synchronized with each other that everyone is expecting the message to come at the same time. A message can therefore be constructed in which the fields appear in this sequence:

*[a, device identifier list, $h_i$]*

where a is an authenticator calculated as

$$a = f(\text{device identifier list, } h_i)$$

In other words, the beginning of the message contains a message authentication code that binds together the device identifiers and the hash chain value. Since the hash chain value is not known by anyone else apart from the serving node until it is actually transmitted, an attack cannot be mounted until the entire message has been read, and only then can a forged message be sent to the devices. This method is secure, as long as it can be assumed that there are no vulnerabilities in directing the devices to use another time slot for the paging message, or to misdirect time synchronization.

These assumptions may not hold in all cases. A stronger approach can be implemented at the cost of delaying paging wake-up by one paging interval. The idea is that the authenticator for one paging message is calculated based on the hash value from the **next** paging message:

$$a = f(\text{device identifier list, } h_{i-1})$$

The devices will not act on the paging message immediately but only after the next periodic paging message comes, as they can then verify the authenticator. The paging messages can even be arranged in pairs (paging message, paging confirmation message) so that their timing prevents synchronization-level attacks from deviating the clocks far enough to make it possible for attackers to learn information from the second message before the first one must be sent.

**2. Per-device Identifier Sequences**

Using the second approach, upon joining the network, each device 120, 130 and the serving node 110 or network can agree to use this mechanism. The network (e.g. a Mobility Management Entity (MME) (not shown)) sends a paging key (Kp) to the serving node 110 (in this example an eNodeB) in an S1 PAGING message. The paging key Kp may be derived, for example, from a Cipher Key and/or Integrity Key (CK/IK) in the Universal Mobile Telecommunications System (UMTS) or the Key Access Security Management Entity (K_ASME) in the Long Term Evolution (LTE) system. The paging key can be made unique for each serving node by techniques similar to the creation of K_eNB in UMTS/LTE networks today. Since the paging key Kp is derived, for example, from CK/IK or K_ASME, it can also be computed at the client devices 120, 130. This eliminates the need to send any keys over the air. For example, it could simply be agreed that Kp is derived from the already generated CK and IK values that were needed for each client device 120, 130 to join the network and run its AKA procedure:

$$Kp = f(CK|IK)$$

Each paging message contains a list of identifiers for devices to be woken up. In the past, these identifiers have been static or some values specified by the network, such as International Mobile Subscriber Identities (IMSIs) or temporary IMSIs (TMSIs) used by the client devices. In accordance with the second approach, if the devices have paging keys, the identifiers can now be values from the cryptographic sequence. Every client device can watch the paging message and look for its own next identifier, and only take action if it sees its own identifier there.

$$ID_0 = f(Kp)$$

$$ID_i = f(ID_{i-1})$$

The right value in the sequence can be either the next unused value, or both sides can assume that every period for transmitting a paging message advances to the next identifier no matter whether that identifier was actually listed in the message.

Other devices do not know Kp and cannot guess which identifiers should be used in the next paging message to wake up a particular device. Depending on the size of the identifier, space attackers may be able to randomly wake up devices (if the identifiers are short) or unable to even do so (if the identifiers are long enough that guessing any identifier is hard).

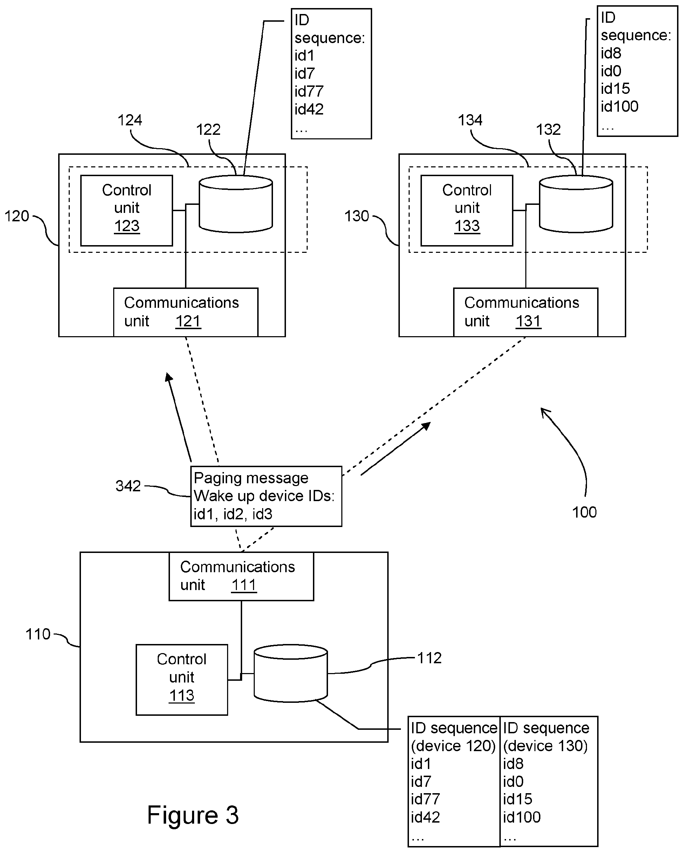

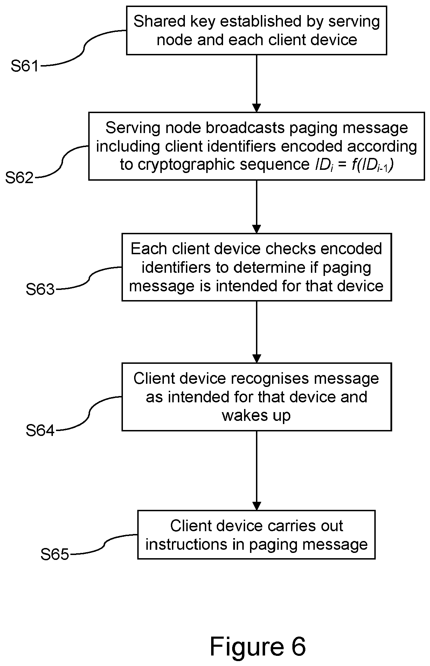

This approach can be understood with reference to Figures 3 and 6. A shared key is agreed between the serving node 110 and each client device 120, 130 as described above (step S61). When the serving node wishes to send a paging message to client device 120 (and other client devices (not shown) it sends a paging message 342 containing id1, id2, id3 as device identifiers (step S62). All of the client devices 120, 130 check the device identifiers id1, id2, id3 to see if the message is intended for them (step S63) One of the client devices 120 recognises id1 as its ID for that stage in the sequence, wakes up (S64) and carries out the instructions in that message (S65). For the next paging message, if instructions are sent again to client device 120, the device identifier would be id7.

A particular advantage of this approach is that third parties do not even know who is being paged.

## 3. Per-device keyed MACs

The third approach is similar to the second. In this approach, the serving node 110 or network calculates a keyed hash value such as a Hash-based Message Authentication Code (HMAC) for each identifier to be advertised. Secret(s) can be transferred from the core network to the base station in the same way as described above for the second approach.

As with the second approach, the static device identifiers are replaced. In this approach the replacements are keyed hash values, using a key $km$ specific to each client device. Such keys already exist in cellular networks for other reasons, and could be set, for example, as:

$$km = IK$$

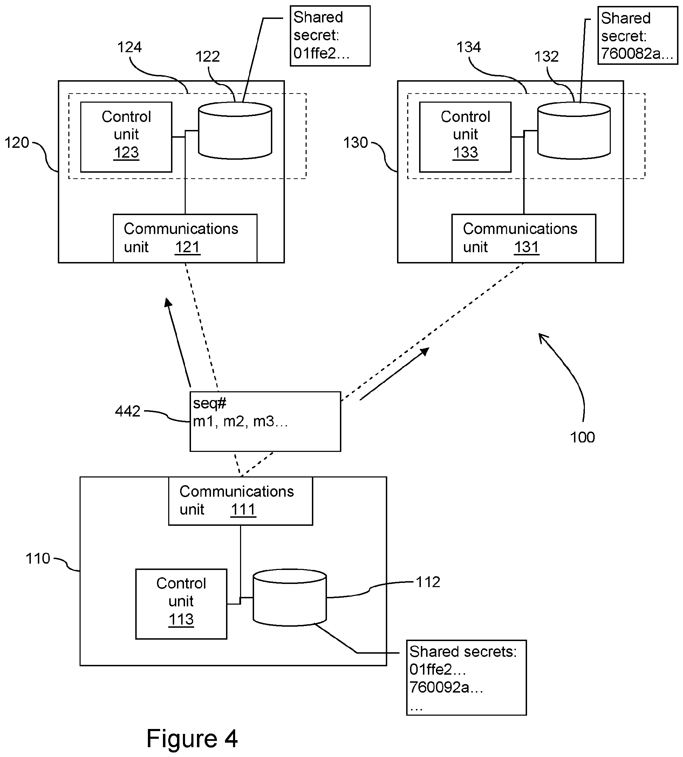

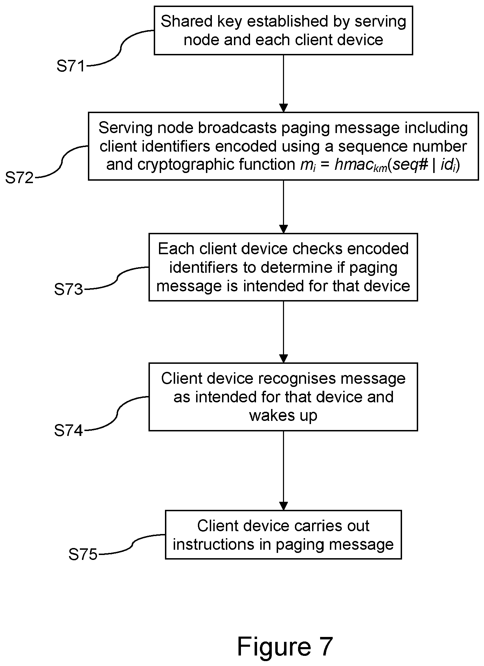

This is illustrated in Figures 4 and 7, where one client device 120 has a shared secret $km = 01ffe2...$ and the other has a shared secret $km = 760082a$, stored in their respective storage devices 122, 132. Both shared secrets are also stored in the storage device 112 of the serving node 110 (step S71 of Figure 7).

A secure paging message 442 takes the form $<seq\#, m_1, m_2, ..., m_n>$ where $seq\#$ is a sequence number, $n$ is the number of nodes to be awaken, and

$$m_i = hmac_{km}(seq\# \mid id_i)$$

where $id_i$ is the identifier of client device $i$.

This paging message is broadcast to all devices (step S72). The values $m_i$ are hash-based, seemingly random values to outside observers. A client device that has the right key can go through the list of items and check if one matches its expected value (step S73). As with the previous approach, if one device recognises its expected value it wakes up (step S74) and carries out the instructions in the paging message (S75). The length of the values can be chosen independently from the length of the device identifiers, but need not be very large to provide a good level of security. For instance, if the identifier size is 16 bits and $m_i$ is 24 bits, any given paging message is 50% bigger than it would be with a simple identifier, but it becomes impossible for an outside attacker to attack a particular node, as sending one value has likelihood of only $2^{-24}$ to hit the right identifier. With a similar arrangement using a traditional HMAC usage with a 16-bit identifier followed by 8-bit HMAC, finding the right HMAC value would be much easier: the likelihood of hitting the right value is $2^{-8}$.

Returning to a system having 24-bit $m_i$ values, even if a third party blindly tries to wake up any node (rather than a specific node), if there are 65536 ($2^{16}$) active nodes any single value chosen would have a chance of finding one of these nodes with a likelihood of $2^{-8}$.

The fact that a time-varying sequence number is included in the calculation makes the $m_i$ values change from one message to another. This is different to paging mechanisms used up until now where identifiers remain constant. Even if the identifiers were kept secret, one could still eavesdrop an insecure paging message and repeat an identifier in the next message. This is not possible in the scheme proposed here. Ensuring that sequence numbers are monotonically increasing provides protection against replay attacks.

Even in the special case of where the identifier and $m_i$ have the same value size it becomes impossible to wake up either a particular node or the same node several times, as the values are based on secret material and are also unpredictable.

It will be noted that the $m_i$ values are different from the identifiers in the sense that collisions cannot be avoided. The network needs to be capable of withstanding a situation where a device wakes up unnecessarily. Proper choice of the identifier and $m_i$ value sizes should be used to make the likelihood of collisions small enough that they do not matter in practice for, say, battery consumption.

It will also be noted that this scheme can also be used to construct compressed paging messages when $m_i$ values are shorter than the identifiers, trading off false positive matches against shorter paging messages.

It will be appreciated that other variations to this approach are possible. For example, a key derivation function could be employed from the already existing $CK$ and $IK$ keys to get a cryptographically independent key

$$km = f(CK, IK)$$

In another variation, an encryption function could be employed instead of a hash, e.g.,

$$m_i = enc_{km}(id_i \mid extrabits)$$

where the extra bits are used to create a longer result than the original identifier. (i.e. $m_i$ has more bits than $id_i$). This is useful to make it harder to guess an encrypted value that decrypts to a real device ID.

In a further variation, a random nonce value may be employed instead of a sequence number. However, this may require a nonce to be sent from the network in the message, enabling an attacker can replay messages unless the terminals keep track of all nonces used. A sequence number is therefore more likely to be a useful mechanism.

A further variation involves employing an implicit sequence number or nonce which is not explicitly carried in the paging message, but can be calculated by both sides (i.e. the serving node 110 and client devices 120, 130). For instance, if paging messages are transmitted at regular intervals, it becomes easy to calculate how many messages have been sent by the passage of time. For example, in GSM the sequence number can be implicitly derived from the TDMA frame number, and this is similar to the manner in which ciphering synchronization is achieved in GSM. This number can be used as the sequence number.

It will be appreciated that the approaches described above allow paging messages to be secured either with an extension of a small number of bits or even, in some cases, no message size extension at all.

A particular benefit of the MAC-based method of the third approach described above is that it is more secure against attempts to wake up a particular node than in a straightforward application of MACs based on symmetric cryptography. The method is secure against all attacks, within limits of the chosen number of bits for the various values. In particular, the method is secure against replay attacks, attacks to attempt to wake up any random device, and particularly secure against attacks attempting to wake up a specific device. Message expansion or even shrinkage can be varied based the chosen number of bits. The only drawbacks of this method are that collisions cannot be avoided, and their effects need to be taken into account, and that if a very large number of nodes needs to be included in every paging message, message expansion can grow even beyond what a signed paging message would bring. Even so, the cryptography in the third approach is simple compared to public-key cryptography needed for signatures.

A small number of additional bits is needed when using the hash chains of the first approach: one hash chain value, shared for all receivers, is needed in each paging message. An identifier sequence with 128-bit identifiers would be quite sufficient, and an identifier sequence with just the number of bits to accommodate the maximum number of concurrently attached client devices (e.g., 16 bits) would be secure against waking up specific nodes and would not cause any message size extension.

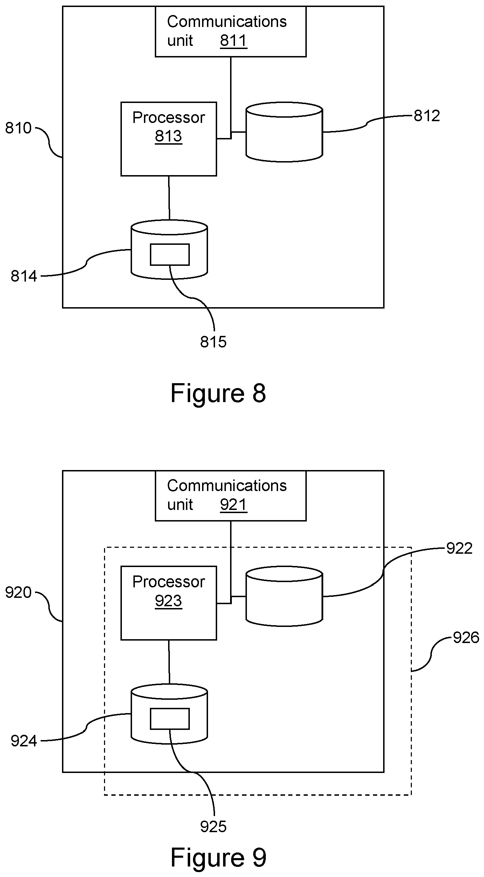

Figure 8 is a schematic diagram of an alternative architecture of a serving node 810, similar to the serving node 110 shown in figures 1-4, and including a communications unit 811 for sending and receiving data and a storage unit 812 for storing data. The serving node 810 also includes a processor 813 operatively connected to the communications unit 811 and storage unit 812, and also to a carrier medium 814 in the form of a memory having stored thereon a server program 815 for causing the serving node to carry out the functions described above. It will be appreciated that the carrier medium 814 and storage unit 812 could be provided in a single storage medium and need not be separate entities.

Figure 9 is a schematic diagram of an alternative architecture of a client device 920, similar to the client devices 120, 130 shown in figures 1-4, and including a communications unit 921 for sending and receiving data and a storage unit 922 for storing data. The client device 920 also includes a processor 923 operatively connected to the communications unit 921 and storage unit 922, and also to a carrier medium 924 in the form of a memory having stored thereon a client program 925 for causing the client device to carry out the functions described above. It will be appreciated that the carrier medium 924 and storage unit 922 could be provided in a single storage medium and need not be separate entities. The storage unit 922, carrier medium 924 and at least some of the security related processing may be implemented in a tamper resistant smart card module (*e.g.* SIM, ISIM, USIM) 926, holding secret keys associated with the user (and which are also shared with the serving node). This smart card module 926 may be removably attached to the rest of the associated client node device 920.

It will be appreciated that variations from the above described embodiments may still fall within the scope of the invention.

**Claims**

1. A device (120, 130) for communicating with a network, comprising:

a communications unit (121, 131) for sending and receiving data;
a storage unit (122, 132) for storing data; and
a control unit (123, 133) for controlling operation of the communications unit and storage unit;
wherein the communications unit is configured to receive a series of paging messages (242, 342, 442) from a serving node (110) in the network, each paging message including identification and authentication information sufficient to identify at least one device and authenticate the message, at least some of the information being protected according to a sequence such that it varies between successive paging messages; and

the control unit is configured to verify the protected part of the information using a cryptographic function and knowledge of the sequence to identify whether the information indicates that the message is an authentic message intended for that device **characterized in that** the identification and authentication information in each paging message includes at least one device identifier and authentication data is sent as a separate value from the device identifier and the control unit is configured to confirm, when a new paging message (242) is received, that the new paging message is secure by determining that the authentication data in the previous paging message is correctly derivable from the authentication data in the new paging message using a one-way hash function stored in the storage unit.

**2.** The device of claim 1, wherein each paging message contains an authentication code calculated as a function of all device identifiers included in the paging message and the authentication data in that message, the authentication code being included in the paging message before the device identifiers and the authentication data, and wherein the control unit is configured to confirm that the paging message is secure only if it determines that the authentication code is correct.

**3.** The device of claim 1, wherein each paging message contains an authentication code calculated as a function of all device identifiers included in the paging message and the authentication data to be used in the subsequent paging message, and wherein the control unit is configured to confirm that the authentication code is correct following receipt of the authentication data in the subsequent paging message.

**4.** The device of claim 1, wherein the identification and authentication information in each paging message includes at least one encrypted device identifier (342, 442), and wherein the control unit is configured to identify whether any encrypted device identifier corresponds to the device and, if so, that the message is intended for that device.

**5.** The device of claim 4, wherein, for each device, the encrypted device identifiers for that device in the series of paging messages follow a sequence for that device, each encrypted device identifier for that device being derivable from the preceding member of the sequence, and wherein the control unit is configured to calculate the encrypted device identifier for that device for each paging message in accordance with the sequence.

**6.** The device of claim 5, wherein the first encrypted device identifier in the sequence for each device is calculated from a secret shared between that device and the serving node.

**7.** The device of claim 4, wherein:

the device and the serving node share a key;
the encrypted device identifier in each paging message (442) is encrypted using the shared key from a combination of a device identifier and a message identifier; and
the control unit is configured to decrypt the at least one encrypted device identifier using the shared key and message identifier to identify whether any device identifier corresponds to that device.

**8.** A serving network node (110), comprising:

a communications unit (111) for sending and receiving data;
a storage unit (112) for storing data; and
a control unit (113) for controlling operation of the communications unit and storage unit;
wherein:
the control unit is configured to generate a series of paging messages (242, 342, 442) for client devices in the network, each paging message including identification and authentication information sufficient to identify at least one client device and authenticate the message to that device, at least some of the information being protected according to a sequence such that it varies between successive paging messages, **characterized in that** the control unit is configured to write the identification and authentication information into each paging message (242) as at least one device identifier and authentication data sent as a separate value from the device identifier, the authentication data in each paging message being derived from the authentication data in the subsequent paging message using a one-way hash function stored in the storage unit.

**9.** The serving network node of claim 8, wherein the control unit is configured to insert into each paging message an authentication code calculated as a function of all device identifiers included in the paging message and the authentication data in that message, the authentication code being included in the paging message before the device identifiers and the authentication data.

**10.** The serving network node of claim 8, wherein the control unit is configured to insert into each paging message an authentication code calculated as a function of all device identifiers included in the paging message and the authentication data to be used in the subsequent paging message.

**11.** The serving network node of claim 8, wherein the control unit is configured to generate at least one encrypted device identifier for insertion into each paging message (342) as the identification and authentication information.

**12.** The serving network node of claim 9, wherein, for each device, the control unit is configured to generate a sequence of encrypted device identifiers for insertion into the series of paging messages, each encrypted device identifier for the device being derivable from the preceding member of the sequence.

**13.** The serving network node of claim 12, wherein the first encrypted device identifier in the sequence is calculated from a secret shared between the device and the serving node.

14. The serving network node of claim 11, wherein the serving node and device share a key, and wherein the control unit is configured to generate the encrypted device identifier in each paging message using the shared key from a combination of a device identifier and a message identifier.

15. The serving network node of claim 14, wherein the control unit is configured to generate the encrypted device identifier in each message using a HMAC function based on the shared key.

16. A method of operating a device (120, 130) for communicating with a network, comprising:

receiving (S53, S62, S72) a series of paging messages (242, 342, 442), each paging message including identification and authentication information sufficient to identify at least one device and authenticate the message, at least some of the information being protected according to a sequence such that it varies between successive paging messages; deriving the protected part of the information using a cryptographic function and knowledge of the sequence (S54, S63, S73); and identifying whether the information indicates that the message is an authentic message intended for that device **characterized in that** the identification and authentication information in each paging message includes at least one device identifier and authentication data sent as a separate value from the device identifier and to confirm, when a new paging message (242) is received, that the new paging message is secure by determining that the authentication data in the previous paging message is correctly derivable from the authentication data in the new paging message using a one-way hash function.

17. A method of securing a sequence of paging messages sent from a serving node (110) to a client node (120, 130) in a network, the method comprising including in each paging message identification and authentication information sufficient to identify at least one device and authenticate the message (S53, S62, S72), at least some of the information being protected according to a sequence such that it varies between successive paging messages **characterized in that** the identification and authentication information in each paging message includes at least one device identifier and authentication data sent as a separate value from the device identifier; wherein the identification and authentication information is written into each paging message (242) as at least one device identifier and authentication data sent as a separate value from the device identifier, the authentication data in each paging message being derived from the authentication data in the subsequent paging message using a one-way hash function.

18. A computer program, comprising computer readable code which, when operated by a device, causes the device to operate as a device according to any of claims 1 to 7.

19. A computer program, comprising computer readable code which, when operated by a serving network node, causes the serving network node to operate as a node according to any of claims 8 to 15.

20. A computer program product comprising a computer readable medium and a computer program according to claim 18 or 19, wherein the computer program is stored on the computer readable medium.

**Patentansprüche**

1. Vorrichtung (120, 130) zum Kommunizieren mit einem Netz, Folgendes umfassend:

eine Kommunikationseinheit (121, 131) zum Senden und Empfangen von Daten; eine Speichereinheit (122, 132) zum Speichern von Daten; und eine Steuereinheit (123, 133) zum Steuern der Operation der Kommunikationseinheit und Speichereinheit; worin die Kommunikationseinheit dazu konfiguriert ist, eine Reihe von Funkrufnachrichten (242, 342, 442) von einem bedienenden Knoten (110) im Netz zu empfangen, wobei jede Funkrufnachricht Identifikations- und Authentifikationsinformation enthält, die hinreicht, mindestens eine Vorrichtung zu identifizieren und die Nachricht zu authentifizieren, wobei mindestens ein Teil der Information gemäß einer Sequenz geschützt ist, sodass sie zwischen aufeinanderfolgenden Funkrufnachrichten variiert; und die Steuereinheit dazu konfiguriert ist, den geschützten Teil der Information unter Verwendung einer kryptographischen Funktion und Kenntnis der Sequenz zu verifizieren, um zu identifizieren, ob die Information anzeigt, dass die Nachricht eine authentische Nachricht ist, die für diese Vorrichtung gedacht ist, **dadurch gekennzeichnet, dass** die Identifikations- und Authentifikationsinformation in jeder Funkrufnachricht mindestens einen Vorrichtungsidentifikator enthält und Authentifikationsdaten als ein separater Wert vom Vorrichtungsidentifikator gesendet werden und die Steuereinheit dazu konfiguriert ist, zu bestätigen, wenn eine neue Funkrufnachricht (242) empfangen wird, dass die neue Funkrufnachricht sicher ist, indem bestimmt wird, dass die Authentifikationsdaten in der vorhergehenden Funkrufnachricht aus den Authentifikationsdaten in der neuen Funkrufnachricht korrekt ableitbar sind unter Verwendung einer in der Speichereinheit gespeicherten Einweg-Hashfunktion.

2. Vorrichtung nach Anspruch 1, worin jede Funkrufnachricht einen Authentifikationscode enthält, der als eine Funktion aller Vorrichtungsidentifikatoren berechnet wird, die in der Funkrufnachricht und den Authentifikationsdaten in dieser Nachricht enthalten sind, wobei der Authentifikationscode vor den Vorrichtungsidentifikatoren in die Funkrufnachricht eingeschlossen wird, und worin die Steuereinheit zum Bestätigen konfiguriert ist, dass die Funkrufnachricht nur dann sicher ist, falls sie bestimmt, dass der Authentifikationscode korrekt ist.

3. Vorrichtung nach Anspruch 1, worin jede Funkrufnachricht einen Authentifikationscode enthält, der als eine Funktion aller Vorrichtungsidentifikatoren berechnet wird, die in der Funkrufnachricht und den Authentifizierungsdaten enthalten sind, die in der nachfolgenden Funkrufnachricht zu verwenden sind, und worin die Steuereinheit dazu konfiguriert ist, zu bestätigen, dass der Authentifikationscode korrekt ist, im Anschluss an den Empfang der Authentifikationsdaten in der nachfolgenden Funkrufnachricht.

4. Vorrichtung nach Anspruch 1, worin die Identifikations- und Authentifikationsinformation in jeder Funkrufnachricht mindestens einen verschlüsselten Vorrichtungsidentifikator (342, 442) enthält und worin die Steuereinheit dazu konfiguriert ist, zu identifizieren, ob ein verschlüsselter Vorrichtungsidentifikator der Vorrichtung entspricht, und falls dies der Fall ist, dass die Nachricht für diese Vorrichtung gedacht ist.

5. Vorrichtung nach Anspruch 4, worin für jede Vorrichtung die verschlüsselten Vorrichtungsidentifikatoren für diese Vorrichtung in der Reihe von Funkrufnachrichten einer Sequenz für diese Vorrichtung folgen, wobei jeder verschlüsselte Vorrichtungsidentifikator für diese Vorrichtung aus dem vorhergehenden Glied der Sequenz ableitbar ist und worin die Steuereinheit dazu konfiguriert ist, den verschlüsselten Vorrichtungsidentifikator für diese Vorrichtung für jede Funkrufnachricht gemäß der Sequenz zu berechnen.

6. Vorrichtung nach Anspruch 5, worin der erste verschlüsselte Vorrichtungsidentifikator in der Sequenz für jede Vorrichtung aus einem Geheimnis berechnet wird, das der Vorrichtung und dem bedienenden Knoten bekannt ist.

7. Vorrichtung nach Anspruch 4, worin:

die Vorrichtung und der bedienende Knoten einen Schlüssel gemeinsam nutzen; der verschlüsselte Vorrichtungsidentifikator in jeder Funkrufnachricht (442) unter Verwendung des gemeinsam genutzten Schlüssels aus einer Kombination eines Vorrichtungsidentifikators und eines Nachrichtidentifikators verschlüsselt ist, und die Steuereinheit dazu konfiguriert ist, den mindestens einen verschlüsselten Vorrichtungsidentifikator unter Verwendung des gemeinsam genutzten Schlüssels und Nachrichtidentifikators zu entschlüsseln, um zu identifizieren, ob ein Nachrichtidentifikator dieser Vorrichtung entspricht.

8. Bedienender Netzknoten (110), Folgendes umfassend:

eine Kommunikationseinheit (111) zum Senden und Empfangen von Daten; eine Speichereinheit (112) zum Speichern von Daten; und eine Steuereinheit (113) zum Steuern der Operation der Kommunikationseinheit und Speichereinheit; worin: die Steuereinheit dazu konfiguriert ist, eine Reihe von Funkrufnachrichten (242, 342, 442) für Client-Vorrichtungen im Netz zu erzeugen, wobei jede Funkrufnachricht Identifikator- und Authentifikationsinformation enthält, die hinreicht, mindestens eine Client-Vorrichtung zu identifizieren und die Nachricht an diese Vorrichtung zu authentifizieren, wobei mindestens ein Teil der Information gemäß einer Sequenz geschützt wird, sodass er zwischen aufeinanderfolgenden Funkrufnachrichten variiert, **dadurch gekennzeichnet, dass** die Steuereinheit dazu konfiguriert ist, Identifikations- und Authentifikationsinformation in jede Funkrufnachricht (242) zu schreiben als mindestens einen Vorrichtungsidentifikator und Authentifikationsdaten, die als ein separater Wert aus dem Vorrichtungsidentifikator gesendet werden, wobei die Authentifikationsdaten in jeder Funkrufnachricht aus den Authentifikationsdaten in der nachfolgenden Funkrufnachricht unter Verwendung einer Einweg-Hashfunktion abgeleitet werden, die in der Speichereinheit gespeichert ist.

9. Bedienender Netzknoten nach Anspruch 8, worin die Steuereinheit dazu konfiguriert ist, in jede Funkrufnachricht einen Authentifikationscode einzufügen, der als eine Funktion aller Vorrichtungsidentifikatoren berechnet wird, die in der Funkrufnachricht und den Authentifikationsdaten in dieser Nachricht enthalten sind, wobei der Authentifikationscode vor den Vorrichtungsidentifikatoren und den Authentifikationsdaten in die Funkrufnachricht eingeschlossen wird.

10. Bedienender Netzknoten nach Anspruch 8, worin die Steuereinheit dazu konfiguriert ist, in jede Funkrufnachricht einen Authentifikationscode einzufügen, der als eine Funktion aller Vorrichtungsidentifikatoren berechnet wird, die in der Funkrufnachricht und den Authentifizierungsdaten enthalten sind, die in der nachfolgenden Funkrufnachricht zu verwenden sind.

11. Bedienender Netzknoten nach Anspruch 8, worin die Steuereinheit dazu konfiguriert ist, mindestens einen verschlüsselten Vorrichtungsidentifikator zu erzeugen zum Einfügen in jede Funkrufnachricht (342) als die Identifikations- und Authentifikationsinformation.

12. Bedienender Netzknoten nach Anspruch 9. worin die Steuereinheit für jede Vorrichtung dazu konfiguriert ist, eine Sequenz verschlüsselter Vorrichtungsidentifikatoren zum Einfügen in die Reihe von Funkrufnachrichten zu erzeugen, wobei jeder verschlüsselte Vorrichtungsidentifikator für die Vorrichtung aus dem vorhergehenden Glied der Sequenz ableitbar ist.

13. Bedienender Netzknoten nach Anspruch 12, worin der erste verschlüsselte Vorrichtungsidentifikator in der Sequenz aus einem Geheimnis berechnet wird, das zwischen der Vorrichtung und dem bedienenden Knoten gemeinsam genutzt wird.

14. Bedienender Netzknoten nach Anspruch 11, worin der bedienende Knoten und die Vorrichtung einen Schlüssel gemeinsam nutzen und worin die Steuereinheit dazu konfiguriert ist, den verschlüsselten Vorrichtungsidentifikator in jeder Funkrufnachricht zu erzeugen unter Verwendung des gemeinsam genutzten Schlüssels aus einer Kombination des Vorrichtungsidentifikators und eines Nachrichtidentifikators.

15. Bedienender Netzknoten nach Anspruch 14, worin die Steuereinheit dazu konfiguriert ist, den verschlüsselten Vorrichtungsidentifikator in jeder Nachricht unter Verwendung einer HMAC-Funktion auf der Basis des gemeinsam genutzten Schlüssels zu erzeugen.

16. Verfahren zum Operieren einer Vorrichtung (120, 130) zum Kommunizieren mit einem Netz, Folgendes umfassend:

Empfangen (S53, S62, S72) einer Reihe von Funkrufnachrichten (242, 342, 442), wobei jede Funkrufnachricht Identifikations- und Authentifikationsinformation enthält, die hinreicht, mindestens eine Vorrichtung zu identifizieren und die Nachricht zu authentifizieren, wobei mindestens ein Teil der Information gemäß einer Sequenz geschützt ist, sodass sie zwischen aufeinanderfolgenden Funkrufnachrichten variiert; Ableiten des geschützten Teils der Information unter Verwendung einer kryptographischen Funktion und Kenntnis der Sequenz (S54, S63, S73); und Identifizieren, ob die Information anzeigt, dass die Nachricht eine authentische Nachricht ist, die für diese Vorrichtung gedacht ist, **dadurch gekennzeichnet, dass** die Identifikations- und Authentifikationsinformation in jeder Funkrufnachricht mindestens einen Vorrichtungsidentifikator und Authentifikationsdaten enthält, als ein separater Wert vom Vorrichtungsidentifikator gesendet, und zu bestätigen, wenn eine neue Funkrufnachricht (242) empfangen wird, dass die neue Funkrufnachricht sicher ist, indem bestimmt wird, dass die Authentifikationsdaten in der vorhergehenden Funkrufnachricht aus den Authentifikationsdaten in der neuen Funkrufnachricht korrekt ableitbar sind unter Verwendung einer Einweg-Hashfünktion.

17. Verfahren zum Sichern einer Sequenz von Funkrufnachrichten, die von einem bedienenden Knoten (110) an einen Client-Knoten (120, 130) in einem Netz gesendet werden, wobei das Verfahren umfasst, dass in jeder Funkrufnachricht Identifikations- und Authentifikationsinformation enthalten ist, die hinreicht, mindestens eine Vorrichtung zu identifizieren und die Nachricht (S53, S62, S72) zu authentifizieren, wobei mindestens ein Teil der Information gemäß einer Sequenz geschützt ist, sodass sie zwischen aufeinanderfolgenden Funkrufnachrichten variiert, **dadurch gekennzeichnet, dass** die Identifikations- und Authentifikationsinformation in jeder Funkrufnachricht mindestens einen Vorrichtungsidentifikator und Authentifikationsdaten enthält, als ein separater Wert vom Vorrichtungsidentifikator gesendet; worin die Identifikations- und Authentifikationsinformation in jede Funkrufnachricht (242) geschrieben wird, als mindestens ein Vorrichtungsidentifikator und Authentifikationsdaten, als ein separater Wert vom Vorrichtungsidentifikator gesendet, wobei die Authentifikationsdaten in jeder Funkrufnachricht aus den Authentifikationsdaten in der nachfolgenden Funkrufnachricht unter Verwendung einer Einweg-Hashfünktion abgeleitet werden.

18. Computerprogramm, computerlesbaren Code umfassend, der, wenn durch eine Vorrichtung operiert, die Vorrichtung veranlasst, wie eine Vorrichtung nach den Ansprüchen 1 bis 7 zu operieren.

19. Computerprogramm, computerlesbaren Code umfassend, der, wenn durch einen bedienenden Netzknoten operiert, den bedienenden Netzknoten veranlasst, als ein Knoten nach einem der Ansprüche 8 bis 15 zu operieren.

20. Computerprogrammprodukt, ein computerlesbares Medium und ein Computerprogramm nach Anspruch 18 oder 19 umfassend, worin das Computerprogramm im computerlesbaren Medium gespeichert ist.

**Revendications**

1. Dispositif (120, 130) pour communiquer avec un réseau, comprenant :

   une unité de communication (121, 131) pour envoyer et recevoir des données ;
   une unité de stockage (122, 132) pour stocker des données ; et
   une unité de commande (123, 133) pour commander le fonctionnement de l'unité de communication et de l'unité de stockage ;
   dans lequel l'unité de communication est configurée de manière à ce qu'elle reçoive une série de messages de radiomessagerie (242, 342, 442) qui proviennent d'un noeud de desserte (110) dans le réseau, chaque message de radiomessagerie incluant une information d'identification et d'authentification qui est suffisante pour identifier au moins un dispositif et pour authentifier le message, au moins une certaine partie de l'information étant protégée conformément à une séquence qui est telle qu'elle varie entre des messages de radiomessagerie successifs ; et
   l'unité de commande est configurée de manière à ce qu'elle vérifie la partie protégée de l'information en utilisant une fonction cryptographique et une connaissance de la séquence de manière à identifier si oui ou non l'information indique que le message est un message authentique destiné à ce dispositif ; **caractérisé en ce que** l'information d'identification et d'authentification dans chaque message de radiomessagerie inclut au moins un identifiant de dispositif et des données d'authentification qui sont envoyées en tant que valeur séparée par rapport à l'identifiant de dispositif, et l'unité de commande est configurée de manière à ce qu'elle confirme, lorsqu'un nouveau message de radiomessagerie (242) est reçu, que le nouveau message de radiomessagerie est sécurisé en déterminant que les données d'authentification dans le message de radiomessagerie précédent peuvent être dérivées de façon correcte à partir des données d'authentification dans le nouveau message de radiomessagerie en utilisant une fonction de hachage monodirectionnelle qui est stockée dans l'unité de stockage.

2. Dispositif selon la revendication 1, dans lequel chaque message de radiomessagerie contient un code d'authentification qui est calculé en tant que fonction de tous les identifiants de dispositif qui sont inclus dans le message de radiomessagerie et des données d'authentification dans ce message, le code d'authentification étant inclus dans le message de radiomessagerie avant les identifiants de dispositif et les données d'authentification, et dans lequel l'unité de commande est configurée de manière à ce qu'elle confirme que le message de radiomessagerie est sécurisé seulement si elle détermine que le code d'authentification est correct

3. Dispositif selon la revendication 1, dans lequel chaque message de radiomessagerie contient un code d'authentification qui est calculé en tant que fonction de tous les identifiants de dispositif qui sont inclus dans le message de radiomessagerie et des données d'authentification qui sont destinées à être utilisées dans le message de radiomessagerie subséquent, et dans lequel l'unité de commande est configurée de manière à ce qu'elle confirme que le code d'authentification est correct suite à la réception des données d'authentification dans le message de radiomessagerie subséquent.

4. Dispositif selon la revendication 1, dans lequel l'information d'identification et d'authentification dans chaque message de radiomessagerie inclut au moins un identifiant de dispositif crypté (342, 442), et dans lequel l'unité de commande est configurée de manière à ce qu'elle identifie si oui ou non un quelconque identifiant de dispositif crypté correspond au dispositif et s'il en est ainsi, que le message est destiné à ce dispositif

5. Dispositif selon la revendication 4, dans lequel, pour chaque dispositif, les identifiants de dispositif cryptés pour ce dispositif dans la série de messages de radiomessagerie suivent une séquence pour ce dispositif, chaque identifiant de dispositif crypté pour ce dispositif pouvant être dérivé à partir de l'élément précédent de la séquence, et dans lequel l'unité de commande est configurée de manière à ce qu'elle calcule l'identifiant de dispositif crypté pour ce dispositif pour chaque message de radiomessagerie conformément à la séquence.

6. Dispositif selon la revendication 5, dans lequel le premier identifiant de dispositif crypté dans la séquence pour chaque dispositif est calculé à partir d'un secret qui est partagé entre ce dispositif et le noeud de desserte.

7. Dispositif selon la revendication 4, dans lequel :

le dispositif et le noeud de desserte partagent une clé ;
l'identifiant de dispositif crypté dans chaque message de radiomessagerie (442) est crypté en utilisant la clé partagée à partir d'une combinaison d'un identifiant de dispositif et d'un identifiant de message ; et
l'unité de commande est configurée de manière à ce qu'elle décrypte l'au moins un identifiant de dispositif crypté en utilisant la clé partagée et l'identifiant de message de manière à identifier si oui ou non un quelconque identifiant de dispositif correspond à ce dispositif.

8. Noeud de réseau de desserte (110), comprenant :

une unité de communication (111) pour envoyer et recevoir des données ;
une unité de stockage (112) pour stocker des données ; et
une unité de commande (113) pour commander le fonctionnement de l'unité de communication et de l'unité de stockage ; dans lequel :
l'unité de commande est configurée de manière à ce qu'elle génère une série de messages de radiomessagerie (242, 342, 442) pour des dispositifs de client dans le réseau, chaque message de radiomessagerie incluant une information d'identification et d'authentification qui est suffisante pour identifier au moins un dispositif de client et pour authentifier le message par rapport à ce dispositif, au moins une certaine partie de l'information étant protégée conformément à une séquence qui est telle qu'elle varie entre des messages de radiomessagerie successifs ; **caractérisé en ce que** l'unité de commande est configurée de manière à ce qu'elle écrive l'information d'identification et d'authentification à l'intérieur de chaque message de radiomessagerie (242) en tant qu'au moins un identifiant de dispositif et que données d'authentification qui sont envoyées en tant que valeur séparée par rapport à l'identifiant de dispositif, les données d'authentification dans chaque message de radiomessagerie étant dérivées à partir des données d'authentification dans le message de radiomessagerie subséquent en utilisant une fonction de hachage monodirectionnelle qui est stockée dans l'unité de stockage.

9. Noeud de réseau de desserte selon la revendication 8, dans lequel l'unité de commande est configurée de manière à ce qu'elle insère, à l'intérieur de chaque message de radiomessagerie, un code d'authentification qui est calculé en tant que fonction de tous les identifiants de dispositif qui sont inclus dans le message de radiomessagerie et des données d'authentification dans ce message, le code d'authentification étant inclus dans le message de radiomessagerie avant les identifiants de dispositif et les données d'authentification.

10. Noeud de réseau de desserte selon la revendication 8, dans lequel l'unité de commande est configurée de manière à ce qu'elle insère, à l'intérieur de chaque message de radiomessagerie, un code d'authentification qui est calculé en tant que fonction de tous les identifiants de dispositif qui sont inclus dans le message de radiomessagerie et des données d'authentification qui sont destinées à être utilisées dans le message de radiomessagerie subséquent.

11. Noeud de réseau de desserte selon la revendication 8, dans lequel l'unité de commande est configurée de manière à ce qu'elle génère au moins un identifiant de dispositif crypté pour son insertion à l'intérieur de chaque message de radiomessagerie (342) en tant qu'information d'identification et d'authentification.

12. Noeud de réseau de desserte selon la revendication 9, dans lequel, pour chaque dispositif, l'unité de commande est configurée de manière à ce qu'elle génère une séquence d'identifiants de dispositif cryptés pour leur insertion à l'intérieur de la série de messages de radiomessagerie, chaque identifiant de dispositif crypté pour le dispositif pouvant être dérivé à partir de l'élément précédent de la séquence.

13. Noeud de réseau de desserte selon la revendication 12, dans lequel le premier identifiant de dispositif crypté dans la séquence est calculé à partir d'un secret qui est partagé entre le dispositif et le noeud de desserte.

14. Noeud de réseau de desserte selon la revendication 11, dans lequel le noeud de desserte et le dispositif partagent une clé, et dans lequel l'unité de commande est configurée de manière à ce qu'elle génère l'identifiant de dispositif crypté dans chaque message de radiomessagerie en utilisant la clé partagée à partir d'une combinaison d'un identifiant de dispositif et d'un identifiant de message.

15. Noeud de réseau de desserte selon la revendication 14, dans lequel l'unité de commande est configurée de manière à ce qu'elle génère l'identifiant de dispositif crypté dans chaque message en utilisant une fonction HMAC qui est basée sur la clé partagée

**16.** Procédé de fonctionnement d'un dispositif (120, 130) pour communiquer avec un réseau, comprenant :

la réception (S53, S62, S72) d'une série de messages de radiomessagerie (242, 342, 442), chaque message de radiomessagerie incluant une information d'identification et d'authentification qui est suffisante pour identifier au moins un dispositif et pour authentifier le message, au moins une certaine partie de l'information étant protégée conformément à une séquence qui est telle qu'elle varie entre des messages de radiomessagerie successifs ;

la dérivation de la partie protégée de l'information en utilisant une fonction cryptographique et une connaissance de la séquence (S54, S63, S73) ; et

l'identification de si oui ou non l'information indique que le message est un message authentique destiné à ce dispositif; **caractérisé en ce que** l'information d'identification et d'authentification dans chaque message de radiomessagerie inclut au moins un identifiant de dispositif et des données d'authentification qui sont envoyées en tant que valeur séparée par rapport à l'identifiant de dispositif, et dont l'objet est de confirmer, lorsqu'un nouveau message de radiomessagerie (242) est reçu, que le nouveau message de radiomessagerie est sécurisé en déterminant que les données d'authentification dans le message de radiomessagerie précédent peuvent être dérivées de façon correcte à partir des données d'authentification dans le nouveau message de radiomessagerie en utilisant une fonction de hachage mono directionnelle.

**17.** Procédé de sécurisation d'une séquence de messages de radiomessagerie qui sont envoyés depuis un noeud de desserte (110) vers un noeud de client (120, 130) dans un réseau, le procédé comprenant l'inclusion, dans chaque message de radiomessagerie, d'une information d'identification et d'authentification qui est suffisante pour identifier au moins un dispositif et pour authentifier le message (S53, S62, S72), au moins une certaine partie de l'information étant protégée conformément à une séquence qui est telle qu'elle varie entre des messages de radiomessagerie successifs ; **caractérisé en ce que** l'information d'identification et d'authentification dans chaque message de radiomessagerie inclut au moins un identifiant de dispositif et des données d'authentification qui sont envoyées en tant que valeur séparée par rapport à l'identifiant de dispositif ; dans lequel l'information d'identification et d'authentification est écrite à l'intérieur de chaque message de radiomessagerie (242) en tant qu'au moins un identifiant de dispositif et que données d'authentification qui sont envoyées en tant que valeur séparée par rapport à l'identifiant de dispositif, les données d'authentification dans chaque message de radiomessagerie étant dérivées à partir des données d'authentification dans le message de radiomessagerie subséquent en utilisant une fonction de hachage mono directionnelle.

**18.** Programme informatique, comprenant un code lisible par ordinateur qui, lorsqu'il est exécuté par un dispositif, amène le dispositif à fonctionner en tant que dispositif selon l'une quelconque des revendications 1 à 7.

**19.** Programme informatique, comprenant un code lisible par ordinateur qui, lorsqu'il est exécuté par un noeud de réseau de desserte, amène le noeud de réseau de desserte à fonctionner en tant que noeud selon l'une quelconque des revendications 8 à 15.

**20.** Progiciel comprenant un support lisible par ordinateur et un programme informatique selon la revendication 18 ou 19, dans lequel le programme informatique est stocké sur le support lisible par ordinateur.

Figure 1

Figure 2

ID
sequence:
id1
id7
id77
id42
...

ID
sequence:
id8
id0
id15
id100
...

124          122

134          132

Control
unit
123

Control
unit
133

120

130

Communications
unit     121

Communications
unit     131

342

Paging message
Wake up device IDs:
id1, id2, id3

100

Communications
unit     111

110

Control
unit
113

112

| ID sequence (device 120) | ID sequence (device 130) |
|---|---|
| id1 | id8 |
| id7 | id0 |
| id77 | id15 |
| id42 | id100 |
| ... | ... |

Figure 3

124    122    Shared
                secret:
                01ffe2...

120    Control
       unit
       123

       Communications
       unit    121

134    132    Shared
                secret:
                760082a...

130    Control
       unit
       133

       Communications
       unit    131

442    seq#
       m1, m2, m3...

100

       Communications
       unit    111

110    Control
       unit
       113

112

Shared secrets:
01ffe2...
760092a...
...

Figure 4

Generate and store hash
sequence at serving node

S51

Serving node sends initialisation
message to client devices including
starting index for hash chain

S52

Broadcast paging message
including client device identifier and
next hash value in sequence

S53

Client device verifies that previous
value in sequence can be obtained
from received hash value and thus
paging message is authentic

S54

Client device carries out
instructions in paging message

S55

Figure 5

Shared key established by serving node and each client device

S61

Serving node broadcasts paging message including client identifiers encoded according to cryptographic sequence $ID_i = f(ID_{i-1})$

S62

Each client device checks encoded identifiers to determine if paging message is intended for that device

S63

Client device recognises message as intended for that device and wakes up

S64

Client device carries out instructions in paging message

S65

Figure 6

```
            ┌────────────────────────────────┐
            │  Shared key established by serving │
            │  node and each client device       │
      S71───┤                                    │
            └────────────────────────────────┘
                           │
                           ▼
        ┌──────────────────────────────────────────┐
        │ Serving node broadcasts paging message including │
        │ client identifiers encoded using a sequence number │
        │ and cryptographic function mᵢ = hmac_km(seq# | idᵢ) │
   S72──┤                                                    │
        └──────────────────────────────────────────┘
                           │
                           ▼
            ┌────────────────────────────────┐
            │  Each client device checks encoded │
            │  identifiers to determine if paging │
      S73───┤  message is intended for that device │
            └────────────────────────────────┘
                           │
                           ▼
            ┌────────────────────────────────┐
            │  Client device recognises message  │
            │  as intended for that device and   │
      S74───┤  wakes up                           │
            └────────────────────────────────┘
                           │
                           ▼
            ┌────────────────────────────────┐
            │  Client device carries out         │
      S75───┤  instructions in paging message    │
            └────────────────────────────────┘
```

S71 — Shared key established by serving node and each client device

S72 — Serving node broadcasts paging message including client identifiers encoded using a sequence number and cryptographic function $m_i = hmac_{km}(seq\# \mid id_i)$

S73 — Each client device checks encoded identifiers to determine if paging message is intended for that device

S74 — Client device recognises message as intended for that device and wakes up

S75 — Client device carries out instructions in paging message

Figure 7

Figure 8

Figure 9

**EP 2 850 862 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2003061480 A1